Europäisches Patentamt

European Patent Office

Office européen des brevets

(11) Veröffentlichungsnummer: **0 416 148 A1**

## (12) EUROPÄISCHE PATENTANMELDUNG

(21) Anmeldenummer: 89116502.9

(22) Anmeldetag: 07.09.89

(51) Int. Cl.5: **G01T 7/02, G01T 1/29**

(43) Veröffentlichungstag der Anmeldung:
**13.03.91 Patentblatt 91/11**

(84) Benannte Vertragsstaaten:
**DE ES FR GB IT NL**

(71) Anmelder: **RSM ANALYTISCHE INSTRUMENTE GmbH
Postfach 12
W-7541 Straubenhardt 1(DE)**

(72) Erfinder: **Kubisiak, Helmut
Neuenbürgerstrasse 30/1
W-7544 Dobel(DE)**

(74) Vertreter: **Rehmann, Klaus H.
Postfach 1310 Hauptbahnhofstrasse
W-8720 Schweinfurt(DE)**

(54) Einrichtung zum gleichzeitigen Messen von Mehrfachproben-Partikel-oder Quanten-Strahlungen.

(57) Die Einrichtung (E) zum gleichzeitigen Messen von Mehrfachproben-Partikel- oder Quanten-Strahlungen besteht aus der die Probenbehälter (2) aufweisenden Mikroplatte (1), dem ortsauflösenden Photonendetektor (4) und einem zwischen Mikroplatte (1) und Photonendetektor (4) angeordneten Lichtleitersystem (5).

Fig. 1

# EINRICHTUNG ZUM GLEICHZEITIGEN MESSEN VON MEHRFACHPROBEN-PARTIKEL- ODER QUANTEN-STRAHLUNGEN

Zur Messung von Partikel- oder Quanten-Strahlung, insbesondere bei Partikeln mit niedriger Energie werden der Probe in festem oder flüssigen Zustand Isotopen in flüssiger Form, sogenannte Flüssigszintillatoren beigefügt, durch welche die Partikel oder Quanten in energieproporzionale Photonenstrahlung umgewandelt werden. Die Proben werden zusammen mit dem Flüssigszintilator in ein transparentes Meßgefäß (Küvette), beispielsweise aus Glas oder Kunststoff gebracht, so daß die Photonen die Gefäßwände passieren und ihre Strahlung durch lichtempfindliche Detektoren erfaßt wird. Bei bekannten Meßgeräten werden als lichtempfindliche Detektoren sogenannte Photomultiplier eingesetzt, welche in der Lage sind, einzelne Photonen zu messen. Diese Photomultiplier werden, um das Kathodenrauschen zu eliminieren, in Koinzidenz eingesetzt, d.h. zwei Photomultiplier werden an dem Meßgefäß so angeordnet, daß jeweils nur die Partikelstrahlung gezählt wird, welche innerhalb der Koinzidenzzeit - meist 20 Nanosekunden - in beiden Photomultipliern gleichzeitig ein Signal liefern. Die von den Detektoren kommende Zählrate wird mittels elektronischer Datenverarbeitung errechnet vom Gesamtsignal subtrahiert oder durch besondere logische Schaltungen erfaßt und eliminiert.

Um eine ausreichende Genauigkeit bei diesen Meßvorgängen zu erhalten, werden die Meßzeiten in der Regel von mindestens 1 Minute bis zu 10 Minuten ausgedehnt. In der Praxis fallen meistens sehr viel mehr als nur eine Probe an, so daß die Anordnung von bis zu 6 Detektorenpaaren bekannt ist. Ebenfalls ist es bekannt, die Meßgeräte mit einem automatischen Probenwechsler zu versehen. Automatische Probenwechsler, welche bis zu 500 Proben aufnehmen können, die dann nacheinander mit der jeweils vorgegebenen Meßzeit gemessen werden, sind bereits im Einsatz. Die lange Meßdauer der bekannten Verfahren ist in vielfacher Hinsicht nachteilig. Bei einem Probenwechsler für 500 Proben und nur einer kurzen Meßzeit von 1 Minute pro Probe, beträgt die Gesamtmeßzeit über 8 Stunden. Bei einer Meßzeit von 10 Minuten dauert die Auswertung der 500 Proben 80 Stunden. Die Probe ändert sich aber vielfach nach einiger Zeit, so daß ein weiterer Nachteil darin besteht, daß die Resultate nicht mehr den tatsächlichen Gegebenheiten entsprechen.

Weiterhin bekannt sind sogenannte automatische Probenzubereitungsanlagen, in welchen die Proben in standardisierten Mikroplatten mit jeweils 96 Probenbehältern automatisch pipettiert werden. Bei derartigen Aufbereitungen mit Mikroplatten liegt die Meßzeit zwischen 1,6 bis 16 Stunden.

Die Erfindung hat sich die Aufgabe gestellt eine Einrichtung zum gleichzeitigen Messen von Mehrfachproben-Partikel- oder QuantenStrahlungen zu schaffen, wobei alle Probebehälter gleichzeitig gemessen und ausgewertet werden.

Die Aufgabe wird mit den im Anspruch 1 offenbarten Merkmalen gelöst.

Die Unteransprüche zeigen besondere Ausgestaltungen des Erfindungsgedankens.

Auf der Zeichnung ist eine beispielsweise Ausführungsform des Erfindungsgedankens schematisch dargestellt.

Es zeigen:

Figur 1 Ansicht der erfindungsgemäßen Einrichtung mit zwei Lichtleitern, teilweise geschnitten

Figur 2 Ansicht der Einrichtung mit einem Lichtleiter, teilweise geschnitten

Figur 3 Schaltungsschema, der als Flüssigszintilatorzähler ausgebildeten Einrichtung in Koinzidenz.

Die mit E bezeichnete Einrichtung, zum gleichzeitigen Messen von Mehrfachproben-Partikel- oder Quanten-Strahlungen besteht aus einer an sich bekannten Mikroplatte 1 - welche in Standardausführung 96 Proben aufnimmt, wobei die Probenbehälter 2 bis auf die nach oben offene Öffnung 3 allseits geschlossen und die Wandungen photonenreflektierend ausgerüstet sind - und aus einem Photonendetektor 4, wobei zwischen Mikroplatte 1 und Photonendetektor 4 ein Lichtleitersystem 5 angeordnet ist. Der Photonendetektor 4 kann ein ortsauflösender Photomultiplier sein, wie er unter der Bezeichnung XP 47 02 von der Firma Philips oder unter der Bezeichnung R 24 86 von der Firma Hamamatsu auf den Markt gebracht wird, oder es sind ortsauflösende micro channel plates, wie sie von Hamamatsu vertrieben werden.

Das Lichtleitersystem 5 besteht aus Lichtleitern 6a, 6b, 6c usw., die zwischen einer Grundplatte 7 und einer Deckplatte 8 angeordnet sind. Die Grundplatte 7 trägt eine Dichtung 9, welche die Öffnungen 3 der Probenbehälter 2 in der Mikroplatte 1 bis auf den Durchtritt der Lichtleiter 6 vollständig abdeckt. Auf der Deckplatte 8 ist der Photonendetektor 4 befestigt.

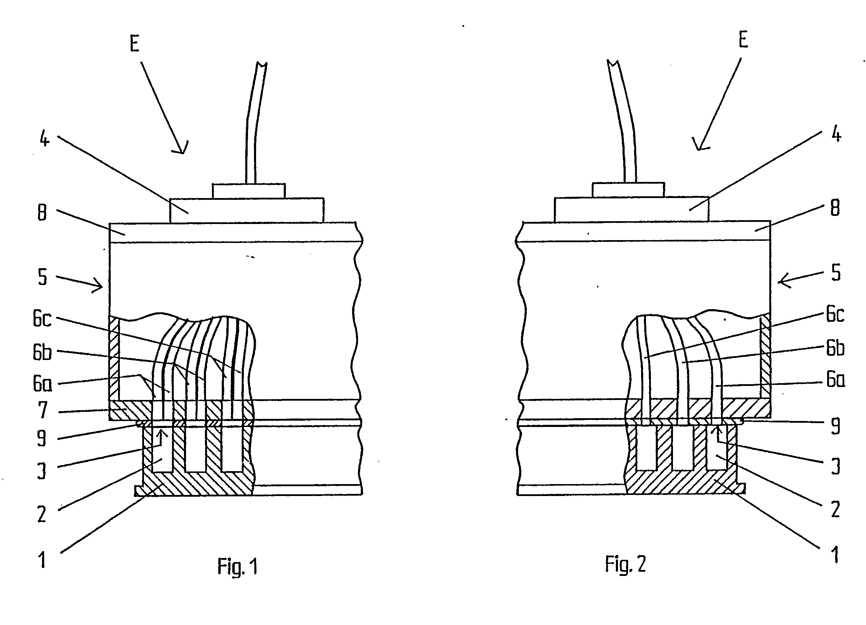

Wird diese Einrichtung als Photonenzähler betrieben, so ist das Lichtleitersystem 5 mit jeweils einem Lichtleiter 6a, 6b und 6c usw. (Figur 2) zwischen Probenbehälter 2 und Photonendetektor 4 versehen. Wird jedoch diese Einrichtung als Flüssigszintilatorzähler betrieben, so sind zwischen Probenbehälter 2 und dem Photonendetektor 4 jeweils zwei Lichtleiter 6a, 6b und 6c usw. (Figur 1) angeordnet.

Die Wirkungsweise dieser Einrichtung ist wie folgt: Vorausgesetzt, daß die Probenbehälter 2 mit der Quanten emittierenden zu messenden Probeflüssigkeit gefüllt sind, und die Mikroplatte 1 dichtend an der Grundplatte 7 des Lichtleitersystems 5 anliegt, dann werden die Strahlungen der Probeflüssigkeit von allen Proben gleichzeitig über die Lichtleiter 6a, 6b, 6c usw. dem Photonendetektor 4 zugeführt, von diesem in an sich bekannter Weise verstärkt und als Signal an ein an sich bekanntes elektronisches Aufbereitungssystem weitergeleitet.

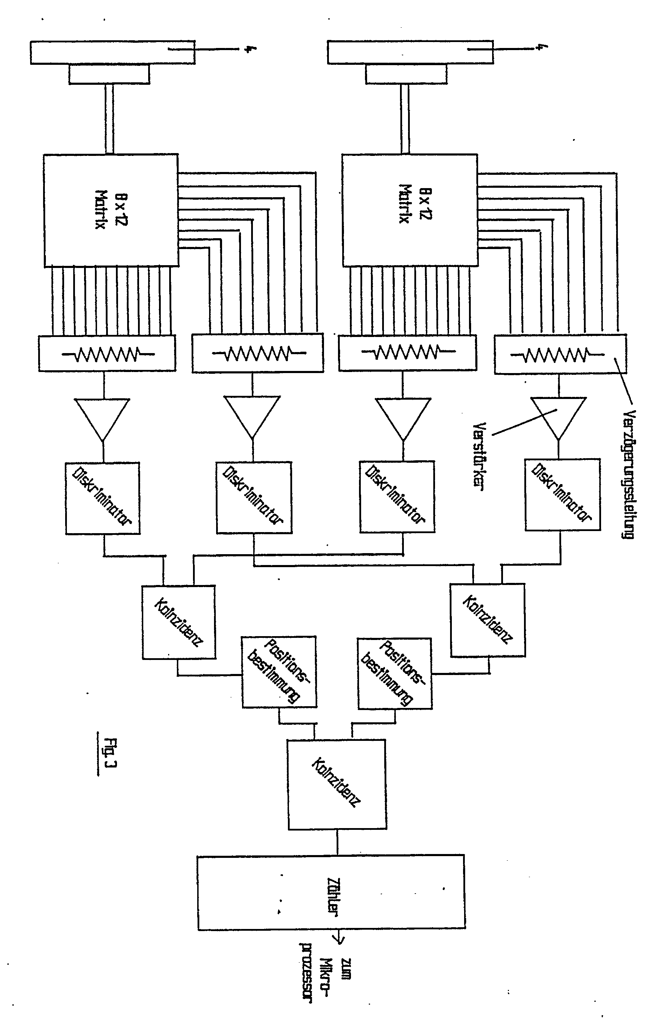

Bei Verwendung als Flüssigszintilationszähler erfolgt die Weitergabe des Signals an das Aufbereitungssystem in Koinzidenz, wie das Schaltschema nach Figur 3 zeigt.

## Ansprüche

1. Einrichtung zum gleichzeitigen Messen von MehrfachprobenPartikel- oder Quanten-Strahlungen, dadurch gekennzeichnet , daß zwischen der die zu messenden Proben aufnehmenden Mikroplatte (1), welche die allseits bis auf eine Öffnung geschlossenen, mit Photonen reflektierenden Wandungen versehene Probenbehälter (2) aufweist und dem ortsauflösenden Photonendetektor (4) ein Lichtleitersystem (5) angeordnet ist.

2. Einrichtung nach Anspruch 1, dadurch gekennzeichne t, daß zwischen einem Probebehälter (2) der Mikroplatte (1) und dem Photonendetektor (4) entweder ein Lichtleiter (6a, 6b, 6c Figur 2) zur Lummineszenzmeßzählung oder zwei Lichtleiter (6a, 6b, 6c Figur 1) zur Flüssigszintilationszählung angeordnet sind.

3. Einrichtung nach Anspruch 1 oder 2, dadurch gekennzeichnet , daß bei Flüssigszintilationszählung die Meßsignale des Photonendetektors (4) in Koinzidenz einem Rechner (Figur 3) zugeführt werden.

EP 0 416 148 A1

Fig. 1

Fig. 2

4

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E,X | WO-A-8 912 838 (WALLAC OY)<br>* Zusammenfassung; Seite 3, Zeile 1 - Seite 4, Zeile 16; Figuren *<br>--- | 1-3 | G 01 T 7/02<br>G 01 T 1/29 |
| Y | FR-A-2 365 811 (WARNER & POTTER)<br>* Seite 2, Zeilen 7-20; Seite 3, Zeilen 19-38; Seite 4, Zeile 35 - Seite 5, Zeile 20; Seite 6, Zeilen 9-16; Figuren *<br>--- | 1-3 | |
| Y | EP-A-0 233 497 (FUJI PHOTO FILM CO., LTD)<br>* Seite 6, Zeilen 23-27; Seite 11, Zeilen 28-54; Seite 13, Zeilen 27-36; Figuren 9-13 *<br>----- | 1-3 | |
| | | | **RECHERCHIERTE SACHGEBIETE (Int. Cl.5)**<br><br>G 01 T |

Der vorliegende Recherchenbericht wurde für alle Patentansprüche erstellt

| Recherchenort | Abschlußdatum der Recherche | Prüfer |
|---|---|---|
| DEN HAAG | 06-07-1990 | DATTA S. |